Europäisches Patentamt

European Patent Office

Office européen des brevets

(19)

(11) Veröffentlichungsnummer : **0 403 635 B1**

(12) **EUROPÄISCHE PATENTSCHRIFT**

(45) Veröffentlichungstag der Patentschrift :
26.08.92 Patentblatt 92/35

(21) Anmeldenummer : 90901573.7

(22) Anmeldetag : 11.01.90

(86) Internationale Anmeldenummer :
PCT/EP90/00062

(87) Internationale Veröffentlichungsnummer :
WO 90/08270 26.07.90 Gazette 90/17

(51) Int. Cl.⁵ : $F16D\ 65/56$, $F16D\ 55/224$, $F16D\ 65/16$

(54) **BETÄTIGUNGSVORRICHTUNG MIT SELBSTTÄTIGER NACHSTELLUNG FÜR EINE FAHRZEUGBREMSE.**

(30) Priorität : 11.01.89 DE 8900277 U

(43) Veröffentlichungstag der Anmeldung :
27.12.90 Patentblatt 90/52

(45) Bekanntmachung des Hinweises auf die
Patenterteilung :
26.08.92 Patentblatt 92/35

(84) Benannte Vertragsstaaten :
DE ES FR GB IT

(56) Entgegenhaltungen :
DE-A- 2 143 575
DE-A- 2 408 706
US-A- 3 765 513
US-A- 3 991 859

(73) Patentinhaber : LUCAS INDUSTRIES PUBLIC
LIMITED COMPANY
Great King Street
Birmingham, B19 2XF (GB)

(72) Erfinder : MEYER, Manfred
Ginsterweg 4
W-5569 Gillenfeld (DE)

(74) Vertreter : Goetz, Rupert, Dipl.-Ing. et al
Wuesthoff & Wuesthoff Patent- und
Rechtsanwälte Schweigerstrasse 2
W-8000 München 90 (DE)

## Beschreibung

Die Erfindung betrifft eine Betätigungsvorrichtung mit selbsttätiger Nachstellung für eine Fahrzeugbremse, insbes. Scheibenbremse, mit
- einem Gehäuse, das einen Gehäuseboden und einen Gehäusemantel mit einer zur Bremse hin offenen Zylinderbohrung aufweist,
- einem Kolben, der zum Betätigen der Bremse in der Zylinderbohrung hydraulisch verschiebbar ist,
- einer Welle für mechanische Feststellbremsungen, die im Gehäuseboden, gleichachsig mit dem Kolben, drehbar gelagert und abgedichtet ist,
- zwei Rampenanordnungen, von denen eine gehäusefest ist und die andere mittels der Welle drehbar und dadurch axial vom Gehäuseboden weg verstellbar ist,
- einem Paar Strebenteile, die so miteinander verschraubt sind, daß sie eine nachstellbare Strebe zwischen der axial verstellbaren Rampenanordnung und dem Kolben bilden, und
- einer Rückstellfeder, die mit axialer Vorspannung zwischen einem gehäusefesten Widerlager und einem Widerlager an einem der beiden Strebenteile angeordnet und bestrebt ist, die verstellbare Rampenanordnung in einer Ruhestellung zu halten.

Bei einer bekannten Betätigungsvorrichtung dieser Gattung (DE-A-2408706, insbes. Fig. 6) ist der Gehäuseboden ein gesondert vom Gehäuse hergestelltes und dann angeschraubtes Bauteil, an dessen axial innerer Seite die gehäusefeste Rampenanordnung unmittelbar ausgebildet ist. Das gehäusefeste Widerlager ist an einer mit dem Gehäuse einstückigen, ringförmigen Zwischenwand ausgebildet, welche die Zylinderbohrung von einem rückwärtigen Raum trennt, in dem die verstellbare Rampenanordnung, ein Widerlager an einem der beiden Strebenteile sowie ein zwischen diesem und der verstellbaren Rampenanordnung angeordnetes Axialdrucklager untergebracht sind.

Das erste Strebenteil ist drehbar und weist ein selbsthemmendes Außengewinde auf, mit dem es in das hülsenförmig gestaltete zweite Strebenteil eingeschraubt ist. Das zweite Strebenteil ist innerhalb des Kolbens, der topfförmig gestaltet ist, axial verschiebbar, jedoch undrehbar geführt und durch eine zusätzliche Feder gegenüber dem Kolben in dessen Betätigungsrichtung vorgespannt. Das erste Strebenteil ist mit der verstellbaren Rampenanordnung durch ein Richtungsgesperre verbunden. Außerdem ist das erste Strebenteil als hydraulischer Hilfskolben ausgebildet, der in der ringförmigen Zwischenwand des Gehäuses abdichtend geführt und derart angeordnet ist, daß eine Nachstellung verhindert wird, wenn der hydraulische Druck in der Zylinderbohrung eine Größe erreicht hat, bei der mit elastischen Verformungen von Bremsenteilen zu rechnen ist.

Diese bekannte Betätigungsvorrichtung erfordert einen erheblichen Bearbeitungs- und Montageaufwand und läßt sich praktisch nicht in Gehäusen unterbringen, deren Zylinderbohrung einen Durchmesser von nur 40 mm oder weniger aufweist. An Vorderrädern von Kraftfahrzeugen ist zwar der Durchmesser der Zylinderbohrung meist erheblich größer, beispielsweise 60 mm. Wegen der üblichen Lenkbarkeit der Vorderräder ist aber der Platz für die Unterbringung einer Scheibenbremse mit wahlweise hydraulischer und mechanischer Betätigung im allgemeinen zu knapp. Aus diesem Grund hat man bisher'meist darauf verzichtet, Vorderradbremsen mit einer hydraulischen und zusätzlich einer mechanischen Betätigungsvorrichtung derart auszugestalten, daß sie als Feststellbremsen verwendbar sind. Andererseits ist es aber bei der üblichen Gewichtsverteilung, bei der die Vorderräder meist mit mehr als 50% des Fahrzeuggewichts belastet sind, im allgemeinen wünschenswert, den Durchmesser der Zylinderbohrung hydraulischer Betätigungsvorrichtungen an Hinterradbremsen verhältnismäßig klein zu bemessen. Beispielsweise kann der Bohrungs- und Rolbendurchmesser bei Personenkraftwagen an den Hinterradbremsen 38 mm, an den Vorderradbremsen aber 62 mm betragen, damit ein Überbremsen der Hinterräder vermieden wird. Deshalb ist es auch bei Hinterradbremsen schwierig, eine kombinierte hydraulische und mechanische Betätigungsvorrichtung unterzubringen, die ausreichend kräftig bemessen und selbsttätig nachstellbar ist, so daß sie für vollständig sichere Feststellbremsungen ebensogut wie für Betriebsbremsungen geeignet ist.

Bei einer anderen bekannten hydraulischen und mechanischen Betätigungsvorrichtung mit selbsttätiger Nachstellung (DE-A-2143575) hat der Kolben ebenfalls einen Hohlraum, in dem zwei miteinander verschraubte Strebenteile der Nachstellvorrichtung sowie eine Rückstellfeder untergebracht sind. Die beiden Strebenteile weisen Steilgewinde auf und sind in axialer Richtung durch die Rückstellfeder gegeneinander vorgespannt, die sich einerseits über ein Axialdrucklager an einem Kopf eines der beiden Strebenteile und andererseits an einem gehäusefesten Widerlager abstützt.

Das gehäusefeste Widerlager ist vom Boden eines topfförmigen Einsatzes gebildet, der mit einem radial äußeren Flansch in eine Ringnut des Gehäuses eingerastet und im übrigen nahezu vollständig im Hohlraum des Kolbens untergebracht ist. Zur mechanischen Betätigung ist eine Welle vorgesehen, die quer zur Achsrichtung des Kolbens im Gehäuse gelagert ist und über einen exzentrisch an ihr abgestützten Stößel gegen einen Handbremskolben drückt. Dieser ist im Gehäuse gleichachsig mit dem hydraulisch betätigbaren Kolben

2

geführt und stützt sich nach Überwindung eines Lüftspiels über eine Konuskupplung am Kopf des ersten Strebenteils ab.

Bei dieser bekannten Betätigungsvorrichtung ist die Herstellung der querliegenden Bohrung für die Welle aufwendig, und die mechanische Kraftübertragung von dieser Welle über den Stößel auf den Handbremskolben hat einen geringen Wirkungsgrad. Die übliche Forderung, daß der Fahrer eines Personenkraftwagens imstande sein soll, mit einer Handkraft von höchstens 20 kp an einem Handbremshebel mit einem Betätigungsweg von nicht mehr als 15 cm eine zuverlässige Feststellbremsung zu bewirken, läßt sich mit dieser bekannten Betätigungsvorrichtung nur bei kleinen und mittleren Personenkraftwagen, nicht aber bei solchen der gehobenen Gewichtsklasse, verwirklichen. Ein Hilfskolben, der ein Nachstellen bei stark belasteter und deshalb elastisch verformter Bremse verhindern würde, ist nicht vorgesehen und wäre bei dieser bekannten Betätigungsvorrichtung auch kaum unterzubringen.

Der Erfindung liegt die Aufgabe zugrunde, eine kombinierte hydraulische und mechanische Betätigungsvorrichtung mit selbsttätiger Nachstellung für eine Fahrzeugbremse, insbes. Scheibenbremse derart weiterzubilden, daß sie leicht zusammenbaubar ist, auch in einem kleinen Gehäuse mit einem Zylinderdurchmesser von beispielsweise 40 mm oder weniger unterzubringen ist und sich mit hohem Wirkungsgrad mechanisch betätigen läßt.

Die Aufgabe ist erfindungsgemäß bei einer Betätigungsvorrichtung der eingangs beschriebenen Gattung dadurch gelöst, daß

– der Gehäuseboden mit dem Gehäusemantel einstückig ausgebildet ist,

– die gehäusefeste Rampenanordnung eine vom Gehäuseboden getrennte, an diesem abgestützte Platte ist,

– das gehäusefeste Widerlager an einem Einsatz ausgebildet ist, an dem eines der Strebenteile verdrehsicher geführt ist, und

– die gehäusefeste Rampenanordnung sowie der Einsatz mittels eines gemeinsamen Befestigungselements im Gehäuse axial unverschiebbar gehalten und durch eine gemeinsame Verdrehsicherung am Drehen gehindert sind.

Durch die mit dem Gehäusemantel einstückige Ausbildung des Gehäusebodens werden Herstellung und Bearbeitung des Gehäuses im Vergleich zur eingangs beschriebenen bekannten Betätigungsvorriohtung vereinfacht. Insbesondere läßt sich das Gehäuse in einem Stück gießen. Dabei läßt sich die Gefahr, daß Lunker entstehen, weitgehend ausschließen, da das Gehäuse so gestaltet werden kann, daß größere Materialanhäufungen vermieden werden. Die gemeinsame Befestigung der gesondert hergestellten gehäusefesten Rampenanordnung und des Einsatzes mit dem gehäusefesten Widerlager erfordert nur einen einfachen Montagearbeitsgang, der sich leicht mechanisieren läßt.

Vorteilhafte Weiterbildungen der Erfindung ergeben sich aus den Unteransprüchen. Von besonderem Vorteil sind die Merkmale, die es ermöglichen, den Einsatz außerhalb des Gehäuses mit den beiden Rampenanordungen, der Rückstellfeder sowie dem Strebenteil, an dem sich die Rückstellfeder abstützt, zu einer Baugruppe zu vereinigen, die durch Befestigen des Einsatzes an der als gehäusefeste Rampenanordnung vorgesehenen Platte zusammengehalten und demzufolge als Ganzes in die Zylinderbohrung einsetzbar ist. Beim Zusammenbau der genannten Baugruppe läßt sich eine gewünschte Vorspannung der Rückstellfeder genau einstellen und dauerhaft fixieren.

Ausführungsbeispiele der Erfindung werden im folgenden anhand schematischer Zeichnungen mit weiteren Einzelheiten erläutert. Es zeigen:

Fig. 1 eine Teilbelag-Scheibenbremse mit einer ersten erfindungsgemäßen Betätigungsvorrichtung im axialen Schnitt,

Fig. 2 einen vergrößerten Ausschnitt aus Fig. 1,

Fig. 3 den Querschnitt III-III in Fig. 1,

Fig. 4 den Querschnitt IV-IV in Fig. 1,

Fig. 5 eine gegenüber Fig. 1 bis 4 abgewandelte Teilbelag-Scheibenbremse mit einer zweiten erfindungsgemäßen Betätigungsvorrichtung in einem der Fig. 1 entsprechenden axialen Schnitt,

Fig. 6 einen vergrößerten Ausschnitt aus Fig. 5,

Fig. 7 den Querschnitt VII-VII in Fig. 5,

Fig. 8 den Querschnitt VIII-VIII in Fig. 5,

Fig. 9 einen den Fig. 2 und 6 entsprechenden Axialschnitt einer dritten Betätigungsvorrichtung gemäß der Erfindung,

Fig. 10 den Querschnitt X-X in Fig. 9,

Fig. 11 den Querschnitt XI-XI in Fig. 9 und

Fig. 12 den Querschnitt XII-XII in Fig. 9.

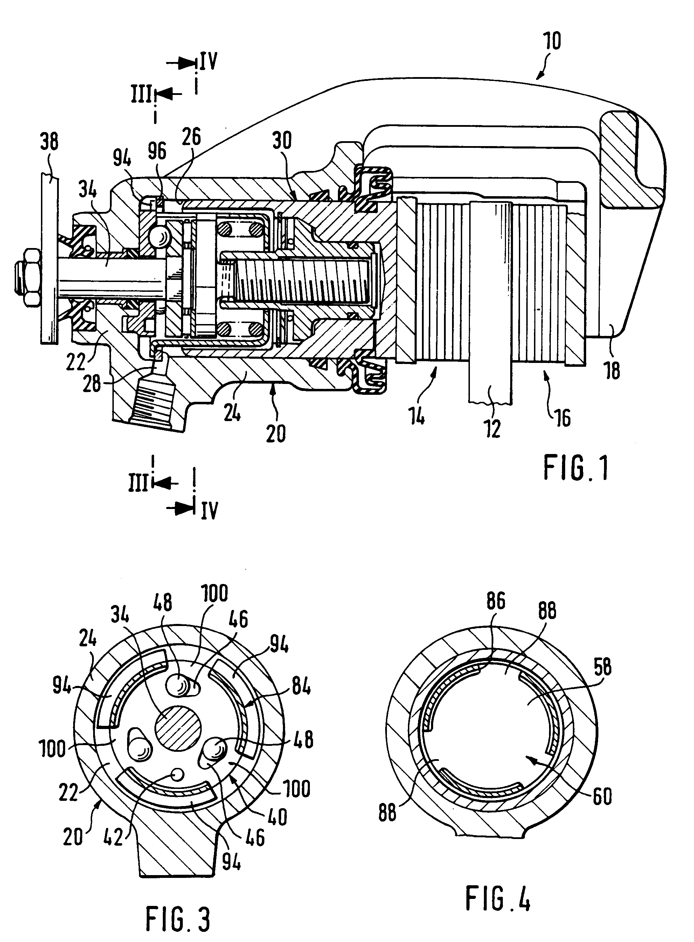

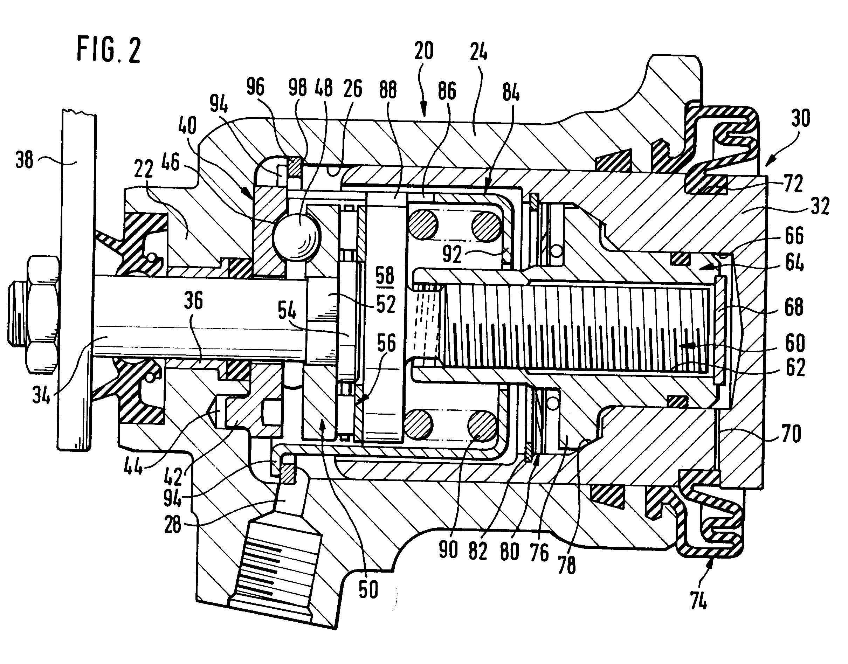

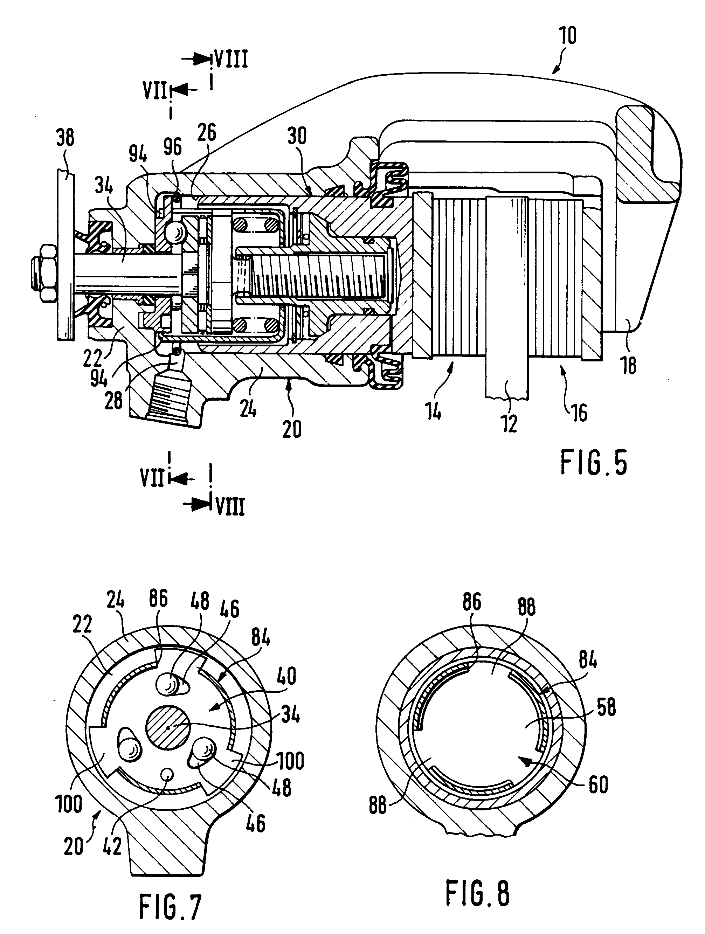

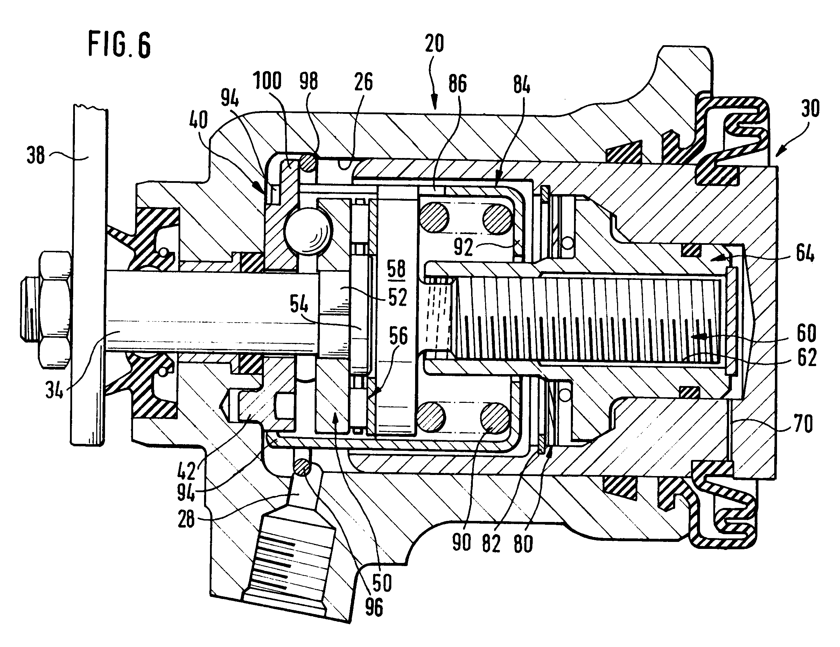

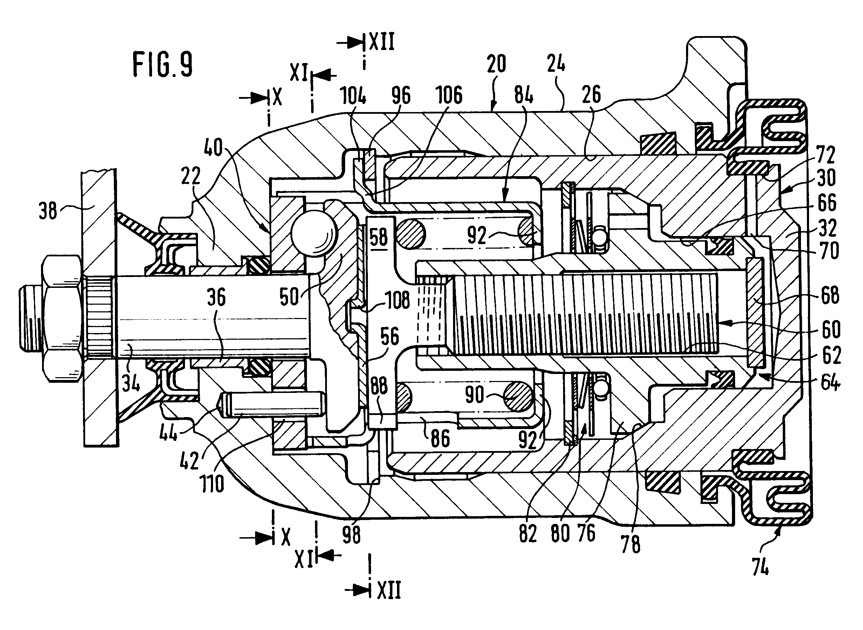

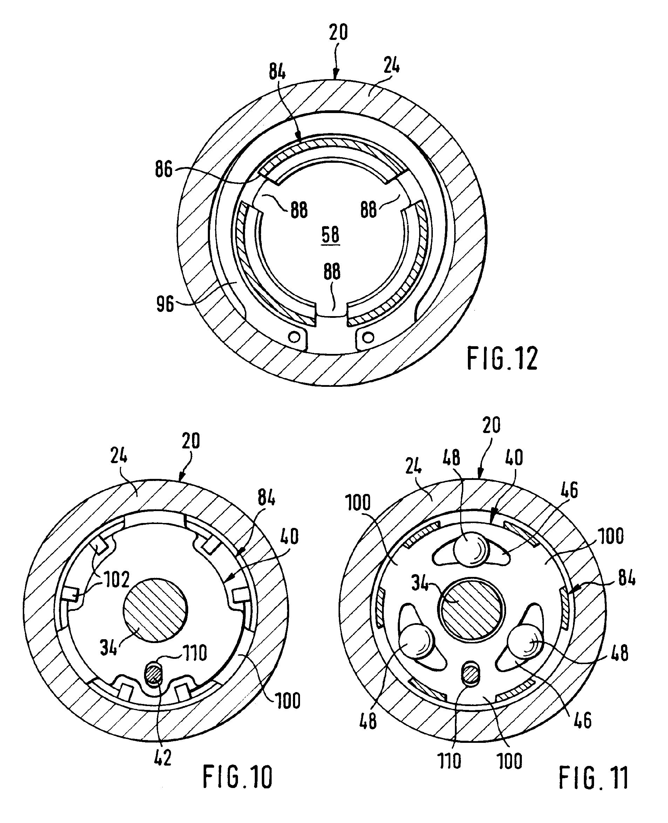

Die drei, in Fig. 1 bis 4 bzw. in Fig. 5 bis 8 bzw. in Fig. 9 bis 12 dargestellten Ausführungsbeispiele werden im folgenden gemeinsam beschrieben; auf Unterschiede wird anschließend eingegangen werden.

Jede der dargestellten Teilbelag-Scheibenbremsen hat einen Schwimmsattel 10, der an einem nicht gezeichneten Bremsträger in üblicher Weise parallel zur Achse einer Bremsscheibe 12 verschiebbar geführt ist. Der Schwimmsattel 10 greift über die Bremsscheibe 12 sowie zwei Bremsbacken 14 und 16 hinweg, von denen die erste Bremsbacke 14 unmittelbar durch die im folgenden beschriebene Betätigungsvorrichtung an die Bremsscheibe 12 anlegbar ist, wobei Reaktionskräfte entstehen, die den Schwimmsattel 10 derart verschieben, daß ein an ihm ausgebildeter Schenkel 18 die zweite Bremsbacke 16 ebenfalls an die Bremsscheibe 12 anlegt.

Zur Betätigungsvorrichtung gehört ein in einem Stück hergestelltes, beispielsweise gegossenes Gehäuse 20 mit einem Gehäuseboden 22 und einem Gehäusemantel 24, in dem eine zur Bremsscheibe 12 hin offene Zylinderbohrung 26 sowie ein Einlaßkanal 28 zum Anschließen an einen Hauptbremszylinder ausgebildet sind. In der Zylinderbohrung 26 ist ein becherförmiger Kolben 30 geführt, der eine geschlossene äußere Stirnwand 32 mit einer Anlagefläche für die Bremsbacke 14 aufweist.

Im Gehäuseboden 22 ist gleichachsig mit dem Kolben 30 eine Welle 34 für mechanische Bremsbetätigungen in einer Lagerbüchse 36 drehbar und axial verschiebbar gelagert. Am äußeren Ende der Welle 34 ist ein Hebel 38 befestigt, der in üblicher Weise, beispielsweise mittels eines Bowdenzugs, mit einem Feststellbremshebel oder -pedal verbunden ist. An der Innenseite des Gehäusebodens 22 liegt eine gehäusefeste Rampenanordnung 40 in Gestalt einer ringförmigen Platte an, die auf die Welle 34 aufgeschoben, an ihr zentriert und am Gehäuse 20 durch eine Verdrehsicherung 42 gegen Drehen gesichert ist. Bei dem ersten und zweiten Ausführungsbeispiel ist die Verdrehsicherung 42 ein durch Prägen, oder sogenanntes Durchstellen, erzeugter Zapfen, der in ein achsparalleles Sackloch 44 im Gehäuseboden 22 eingreift.

An der gehäusefesten Rampenanordnung 40 sind drei in Umfangsrichtung langgestreckte, wannenartige Rampen 46 ausgebildet, die je einen in den dargestellten Beispielen kugelförmigen Spreizkörper 48 aufnehmen. Die Spreizkörper 48 wirken mit je einer entsprechenden Rampe einer ebenfalls ringscheibenförmigen verstellbaren Rampenanordnung 50 zusammen. Diese ist bei dem ersten und zweiten Ausführungsbeispiel auf einen profilierten, beispielsweise mit Vielkant- oder Vielnutprofil ausgebildeten Abschnitt 52 der Welle 34 aufgeschoben. Dabei hat die Welle 34 einen Kopf 54, der ein Axialdrucklager 56 zentriert. Das Axialdrucklager 56 ist bei dem ersten und zweiten Ausführungsbeispiel ein Nadellager. Die verstellbare Rampenanordnung 50 stützt sich in axialer Richtung gegen von den Spreizkörpern 48 ausgeübten Druck über das Axialdrucklager 56 an einem Widerlager 58 ab, das an einem bolzenförmigen Strebenteil 60 ausgebildet ist.

Das bolzenförmige Strebenteil 60 ist mittels einer Steilgewindepaarung 62, die selbsthemmungsfrei ist und ein genau festgelegtes Gewindespiel hat, mit einem hülsenförmigen Strebenteil 64 verschraubt und bildet mit diesem zusammen eine gleichachsig mit dem Kolben 30 und der Welle 34 angeordnete Strebe, deren wirksame Länge entsprechend dem allmählich fortschreitenden Belagverschleiß der Bremsbacken 14 und 16 vergrößerbar ist. Das hülsenförmige Strebenteil 64 ist als Hilfskolben ausgebildet und in einer entsprechenden Hilfszylinderbohrung 66 im Kolben 30 verschiebbar geführt.

Das der Stirnwand 32 zugewandte Ende des hülsenförmigen Strebenteils 64 ist durch eine Bodenplatte 68 dicht verschlossen. Der durch diese Bodenplatte 68 und die Stirnwand 32 begrenzte Teil der Hilfszylinderbohrung 66 ist, damit er stets drucklos bleibt, durch einen radialen Entlastungskanal 70 mit einer äußeren Nut 72 des Kolbens 30 verbunden. In der Nut 72 ist ein Ende eines Faltenbalges 74 aufgenommen, der das aus der Zylinderbohrung 26 herausragende Ende des Kolbens 30 mit dem Gehäuse 20 verbindet und dadurch die Zylinderbohrung 26 vor Verschmutzung schützt.

Am hülsenförmigen Strebenteil 64 ist ein konischer Flansch 76 ausgebildet, dem ein Innenkonus 78 im Kolben 30 zugeordnet ist. Innerhalb des Kolbens 30 ist eine Federscheibenanordnung 80 mit axialer Vorspannung zwischen dem Flansch 76 und einem in den Kolben 30 eingerasteten Sicherungsring 82 angeordnet. Die Federscheibenanordnung 80 hält normalerweise den Flansch 76 am Innenkonus 78 anliegend und verhindert dadurch eine Drehung des hülsenförmigen Strebenteils 64 gegenüber dem Kolben 30. Der Kolben 30 ist seinerseits durch übliche Mittel, beispielsweise durch sein Zusammenwirken mit der Bremsbacke 14, normalerweise daran gehindert, sich zu drehen.

Innerhalb der Zylinderbohrung 26 - und weitgehend innerhalb des becherförmigen Kolbens 30 - ist ein hülsen- oder käfigartiger Einsatz 84 angeordnet, der am Gehäuse 20 gegen Axialverschiebung sowie gegen Drehung befestigt ist. Der Einsatz 84 ist - beispielsweise als Tiefziehteil aus Blech - so gestaltet, daß der bolzenförmige Strebenteil 60 durch den Einsatz 84 gegen Drehen gesichert ist, ohne dadurch an Axialverschiebungen gehindert zu sein. Bei den dargestellten Beispielen hat der Einsatz 84 drei Längsnuten 86, in die je ein radialer Vorsprung 88 des Widerlagers 58 eingreift.

An der vom Axialdrucklager 56 abgewandten Seite des Widerlagers 58 stützt sich eine Rückstellfeder 90, im dargestellten Beispiel eine schraubenförmige Drahtfeder, mit einem Ende ab; ihr anderes Ende ist an einem gehäusefesten Widerlager 92 abgestützt, das von einem radial nach innen ragenden Flansch des Einsatzes 84 gebildet ist. Die Rückstellfeder 90 ist mit einer bestimmten Kraft von beispielsweise 50 kp vorgespannt, so daß sie bestrebt ist, die verstellbare Rampenanordnung 50 in ihrer der gehäusefesten Rampenanordnung 40 am engsten benachbarten Stellung, der Ruhestellung, zu halten.

Der Einsatz 84 hat für seine Befestigung einen Fußrand 94, der beim ersten Ausführungsbeispiel unmittelbar, beim zweiten Ausführungsbeispiel hingegen mittelbar mit einem ringförmigen, radial federnden Befestigungselement 96 zusammenwirkt. Das Befestigungselement 96 ist hinter einer Innenschulter 98 nahe dem Übergang zwischen der Zylinderbohrung 26 und dem Gehäuseboden 22 eingerastet. Die Innenschulter 98 erstreckt sich quer durch die Mündung des Einlaßkanals 28 in die Zylinderbohrung 26, so daß man mit einem von außen in den Einlaßkanal 28 eingeführten Werkzeug, beispielsweise einem schlanken Schraubendreher, das Befestigungselement 96 radial nach innen drücken und dadurch ausrasten kann.

Unterschiede zwischen dem ersten und dem zweiten zeichnerisch dargestellten Ausführungsbeispiel einer Betätigungsvorrichtung bestehen darin, daß das ringförmige Befestigungselement 96 gemäß Fig. 1 bis 4 einen rechteckigen Querschnitt hat und die Innenschulter 98 in einer zur Achse der Zylinderbohrung 26 normalen Ebene liegt, während das Befestigungselement 96 gemäß Fig. 5 bis 8 einen runden Querschnitt hat und die Innenschulter 98 eine dem Gehäuseboden 22 zugewandte Kegelfläche ist.

Ein weiterer Unterschied zwischen der ersten und zweiten Betätigungsvorrichtung besteht darin, daß der Fußrand 94 des Einsatzes 84 gemäß Fig. 1 bis 4 radial nach außen ragt und unmittelbar hinter das ringförmige Befestigungselement 96 greift. Der Einsatz 84 drückt über die Rückstellfeder 90, das Widerlager 58, das Axialdrucklager 56 und die verstellbare Rampenanordnung 50 samt den Spreizkörpern 48 axial gegen die gehäusefeste Rampenanordnung 40, so daß diese an einer Verschiebung vom Gehäuseboden 22 weg gehindert ist. Die gehäusefeste Rampenanordnung 40 hat drei radiale Vorsprünge 100, die in je eine Längsnut 86 des Einsatzes 84 eingreifen, so daß dieser durch die gehäusefeste Rampenanordnung 40 daran gehindert ist, sich zu drehen.

Bei dem zweiten Ausführungsbeispiel gemäß Fig. 5 bis 8 ist der Fußrand 94 des Einsatzes 84 radial nach innen umgebogen und hintergreift die Rampenanordnung 40; deren radiale Vorsprünge 100 sind unmittelbar durch das zugehörige Befestigungselement 96 an einer Axialverschiebung gehindert. Auch hier greifen die radialen Vorsprünge 100 der gehäusefesten Rampenanordnung 40 in je eine Längsnut 86 des Einsatzes 84, so daß dieser gegen Drehen gesichert ist.

Die in Fig. 5 bis 8 dargestellte Verbindung zwischen dem Einsatz 84 und der Rampenanordnung 40 hat den Vorteil, daß sie sich außerhalb des Gehäuses 20 herstellen läßt, wodurch der Einsatz 84 mit der Welle 34, den beiden Rampenanordnungen 40 und 50 samt dazwischenliegenden Spreizkörpern 48, sowie mit dem Axialdrucklager 56, dem bolzenförmigen Strebenteil 60 und der Rückstellfeder 90 zu einer Baugruppe vereinigt wird, die sich auch maschinell montieren und in das Gehäuse 20 einschieben läßt. Anschließend wird das hülsenförmige Strebenteil 64 samt Federscheibenanordnung 80 in den Kolben 30 eingesetzt und mittels des Sicherungsrings 82 gesichert. Dann wird der Kolben 30 in die Zylinderbohrung 26 eingeschoben und dabei derart gedreht, daß die Strebenteile 60 und 64 zusammengeschraubt werden. Schließlich wird der Faltenbalg 74, der zuvor schon am Gehäuse 20 befestigt worden ist, auch am Kolben 30 befestigt.

Das in Fig. 9 bis 12 dargestellte dritte Ausführungsbeispiel einer Bremsbetätigungsvorrichtung hat einen wiederum aus Blech tiefgezogenen Einsatz 84, der Gestaltungsmerkmale der beiden zuvor beschriebenen Ausführungsbeispiele in sich vereinigt. Vergleichbar mit Fig. 5 bis 8 hat der Einsatz 84 gemäß Fig. 9 bis 12 an seinem vom Widerlager 92 entfernten Ende mehrere radial nach innen umgebogene Lappen 102, die hinter die gehäusefeste Rampenanordnung 40 greifen, so daß diese mit der axial beweglichen und drehbaren Rampenanordnung 50 sowie dem bolzenförmigen Strebenteil 60, dem Axialdrucklager 56 und der Rückstellfeder 90 zu einer Baugruppe vereinigt ist, die außerhalb des Gehäuses 20 zusammengesetzt und als Ganzes eingebaut wird. Die Ausführungsform gemäß Fig. 9 bis 12 ist hingegen mit der in Fig. 1 bis 4 dargestellten darin vergleichbar, daß der Einsatz 84 mittels eines Befestigungselements 96 in Form eines normgemäßen Sicherungsrings am Gehäuse 20 befestigt ist. Zu diesem Zweck hat der Einsatz 84 gemäß Fig. 9 radial nach außen abgekantete Lappen 104, die hinter das Befestigungselement 96 greifen.

Im Bereich der radial nach außen abgekanteten Lappen 104 hat der Einsatz 84 eine Ringschulter oder Kröpfung 106. Der gesamte in Fig. 9 rechts von dieser Kröpfung, und im wesentlichen innerhalb des Kolbens 30 angeordnete Teil des Einsatzes 84 hat einen merklich geringeren Durchmesser als der Innenraum des Kolbens 30. Der Einsatz 84 läßt sich deshalb auch in Verbindung mit einem Kolben 30 von so kleinem Durchmesser verwenden, wie er beispielsweise bei Hinterradbremsen kleiner Personenkraftwagen üblich ist. Der vom Kolben 30 aus gesehen jenseits der Kröpfung 106 angeordnete Teil des Einsatzes 84 hat hingegen etwa den gleichen Durchmesser wie bei dem Ausführungsbeispiel gemäß Fig. 5 bis 8, so daß der Einsatz 84 trotz seiner äußerst raumsparenden Bauweise die verstellbare Rampenanordnung 50 umschließt, ohne diese zu berühren.

Die verstellbare Rampenanordnung 50 ist im Gegensatz zum ersten und zweiten Ausführungsbeispiel mit der Welle 34 einstückig ausgebildet und stützt sich wie bei den zuvor beschriebenen Ausführungsbeispielen über ein Axialdrucklager 56 am Widerlager 58 ab. Gemäß Fig. 9 ist das Axialdrucklager 56 jedoch eine kreisförmige Gleitlagerscheibe aus Stahlblech mit einer Beschichtung aus Polytetrafluorethylen, in die ein Blei-Rupfer- Gemisch eingelagert ist. Diese Gleitlagerscheibe 56 hat einen mittigen Vorsprung 108, der in eine entsprechende zentrale Aussparung der verstellbaren Rampenanordnung 50 eingreift, wodurch die Gleitlagerscheibe 56 zentriert ist. Die am Widerlager 58 ausgebildete Anlagefläche für die Gleitlagerscheibe 56 hat vorzugsweise eine leichte, im Maßstab der Zeichnung nicht darstellbare konvexe sphärische Wölbung, der sich die Gleitlagerscheibe 56 anpaßt. Diese Wölbung verhindert, daß das Widerlager 58 sich gegen die Rampenanordnung 50 verkantet, wenn zwischen beiden infolge von Herstellungsungenauigkeiten ein Achsfluchtungsfehler bestehen sollte.

Die Verdrehsicherung 42 ist gemäß Fig. 9 bis 12 von einem achsparallelen Stift gebildet, der in das Sackloch 44 eingeschlagen ist und in ein in radialer Richtung längliches Loch 110 der gehäusefesten Rampenanordnung 40 eingreift. Der Stift 42 hat in dem Loch 110 nur ein sehr kleines Spiel in Umfangsrichtung der gehäusefesten Rampenanordnung 40, so daß diese nahezu ohne Spiel in Umfangsrichtung festgehalten ist. In radialer Richtung hat die gehäusefeste Rampenanordnung 40 jedoch ein merkliches Spiel sowohl in bezug auf die Welle 34 wie in bezug auf das Loch 110. Deshalb bleibt es den drei kugelförmigen Spreizkörpern 48 vorbehalten, die gehäusefeste Rampenanordnung 40 in bezug auf die verstellbare Rampenanordnung 50 derart zu zentrieren, daß die Spreizkörper 48 verkantungsfrei in den zugehörigen, die Rampen 46 bildenden Ausnehmungen der beiden Rampenanordnungen 40 und 50 laufen.

Die Wirkungsweise der Bremsbetätigungsvorrichtung ist bei den drei dargestellten Ausführungsbeispielen gleich. Bei hydraulischer Bremsbetätigung mit einem mäßigen Druck, durch den der Schwimmsattel 10 sowie die Reibbeläge der Bremsbacken 14 und 16 nicht nennenswert verformt werden, wird der Kolben 30 in Richtung zur Bremsscheibe 12 hin verschoben. Solange diese Verschiebung nicht größer ist als das in der Steilgewindepaarung 62 zwischen den Strebenteilen 60 und 64 bestehende Gewindespiel, das dem vorgesehenen Bremslüftspiel entspricht, macht das hülsenförmige Strebenteil 64 die Verschiebung des Kolbens 30 vollständig mit; die Federscheibenanordnung 80 gibt also noch nicht nach.

Wenn jedoch infolge von Abnutzung der Bremsbeläge ein über das vorgesehene Bremslüftspiel hinausgehender Weg des Kolbens 30 erforderlich ist, um die Bremsbacken 14 und 16 an die Bremsscheibe 12 anzulegen, dann hindert das durch die Rückstellfeder 90 festgehaltene bolzenförmige Strebenteil 60 das hülsenförmige Strebenteil 64 daran, bei hydraulischer Betätigung die gesamte Verschiebung des Kolbens 30 zur Bremsscheibe 12 hin mitzumachen. Infolgedessen wird der konische Flansch 76 des hülsenförmigen Strebenteils 64 gegen den Widerstand der Federscheibenanordnung 80, der schwächer ist als die Vorspannung der Rückstellfeder 90, vom Innenkonus 78 etwas abgehoben. Der hülsenförmige Strebenteil 64 ist nun an einer Drehung um seine Achse nicht mehr gehindert.

Die von der Steilgewindepaarung 62 übertragene Axialkraft, mit der das bolzenförmige Strebenteil 60 versucht, das hülsenförmige Strebenteil 64 zurückzuhalten, hat eine Umfangskomponente, erzeugt also ein Drehmoment, durch welches das hülsenförmige Strebenteil 64 nun derart gedreht wird, daß es sich etwas vom bolzenförmigen Strebenteil 60 abschraubt. Infolgedessen kommt der konische Flansch 76 wieder am Innenkonus 78 des Kolbens 30 zum Anliegen. Da die wirksame Länge der von den beiden Strebenteilen 60 und 64 gebildeten Strebe nun vergrößert ist, wird der Kolben 30 nach der Bremsbetätigung daran gehindert, ganz in seine ursprüngliche Ausgangsstellung zurückzukehren; das Bremslüftspiel ist somit wieder auf seinen Sollbetrag verkleinert worden.

Falls bei einer kräftigen hydraulischen Bremsbetätigung innerhalb der Zylinderbohrung 26 ein Druck von beispielsweise 20 bar oder mehr entsteht, muß insbes. am Schwimmsattel 10 und an den Reibbelägen der Bremsbacken 14 und 16 mit elastischen Verformungen gerechnet werden. Eine Nachstellung, die solche vorübergehenden Verformungen kompensieren würde, ist unerwünscht und wird deshalb folgendermaßen vermieden:

Der Druck in der Zylinderbohrung 26 wirkt auch auf das als Hilfskolben ausgebildete hülsenförmige Strebenteil 64. Bei kräftiger hydraulischer Betätigung sind die von der Federscheibenanordnung 80 und vom hydraulischen Druck auf das hülsenförmige Strebenteil 64 ausgeübten axialen Kräfte insgesamt größer als die Kraft, die das am bolzenförmigen Strebenteil 60 ausgebildete Widerlager 58 benötigt, um die Rückstellfeder 90 zusammenzudrücken. Die Rückstellfeder 90 ist also nicht mehr imstande, das bolzenförmige Strebenteil 60 festzuhalten und dadurch den Flansch 76 vom Innenkonus 78 abzuheben. Das hülsenförmige Strebenteil 64 bleibt somit daran gehindert, sich zu drehen. Die Bremsbetätigung findet deshalb ohne Nachstellung statt. Erst wenn der hydraulische Druck unter den genannten Schwellenwert von beispielsweise 20 bar gesunken ist, kann eine Nachstellung nachgeholt werden, wenn dies durch fortgeschrittenen Belagverschleiß der Bremsbacken 14 und 16 nötig geworden ist.

Wenn die Bremse mechanisch betätigt werden soll, beispielsweise für eine Feststellbremsung, dann wird die Welle 34 mittels des Hebels 38 gedreht. Infolgedessen laufen die Spreizkörper 48 auf die Rampen 46 der beiden Rampenanordnungen 40 und 50 auf und drücken die verstellbare Rampenanordnung 50 in Richtung zur Bremsscheibe 10 hin. Dabei übt die verstellbare Rampenanordnung 50 über das Axialdrucklager 56 eine axiale Druckkraft auf das bolzenförmige Strebenteil 60 aus; diese Kraft wird über die Steilgewindepaarung 62 nach Überwindung des Gewindespiels auf das hülsenförmige Strebenteil 64 und von diesem über dessen konischen Flansch 76 auf den Innenkonus 78, und somit auf den Kolben 30, übertragen. Dabei ist das hülsenförmige Strebenteil 64 an einer Drehung gehindert. Die beiden Strebenteile 60 und 64 bilden somit bei mechanischer Betätigung eine vollständig starre Strebe.

**Patentansprüche**

1. Betätigungsvorrichtung mit selbsttätiger Nachstellung für eine Fahrzeugbremse, insbes. Scheibenbremse, mit
   – einem Gehäuse (20), das einen Gehäuseboden (22) und einen Gehäusemantel (24) mit einer zur Bremse hin offenen Zylinderbohrung (26) aufweist,
   – einem Kolben (30), der zum Betätigen der Bremse in der Zylinderbohrung (26) hydraulisch verschiebbar ist,
   – einer Welle (34) für mechanische Feststellbremsungen, die im Gehäuseboden (22), gleichachsig mit dem Kolben (30), drehbar gelagert und abgedichtet ist,
   – zwei Rampenanordnungen (40, 50), von denen eine (40) gehäusefest ist und die andere (50) mittels der Welle (34) drehbar und dadurch axial vom Gehäuseboden (22) weg verstellbar ist,
   – einem Paar Strebenteile (60, 64), die so miteinander verschraubt sind, daß sie eine nachstellbare Strebe zwischen der axial verstellbaren Rampenanordnung (50) und dem Kolben (30) bilden, und
   – einer Rückstellfeder (90), die mit axialer Vorspannung zwischen einem gehäusefesten Widerlager (92) und einem Widerlager (58) an einem der beiden Strebenteile (60) angeordnet und bestrebt ist, die verstellbare Rampenanordnung (50) in einer Ruhestellung zu halten,
   dadurch **gekennzeichnet**, daß
   – der Gehäuseboden (22) mit dem Gehäusemantel (24) einstückig ausgebildet ist,
   – die gehäusefeste Rampenanordnung (40) eine vom Gehäuseboden (22) getrennte, an diesem abgestützte Platte ist,
   – das gehäusefeste Widerlager (92) an einem Einsatz (84) ausgebildet ist, an dem eines der Strebenteile (60) verdrehsicher geführt ist, und
   – die gehäusefeste Rampenanordnung (40) sowie der Einsatz (84) mittels eines gemeinsamen Befestigungselements (96) im Gehäuse (20) axial unverschiebbar gehalten und durch eine gemeinsame Verdrehsicherung (42) am Drehen gehindert sind.

2. Vorrichtung nach Anspruch 1,
   dadurch **gekennzeichnet**, daß das gemeinsame Befestigungselement (96) ein radial federnder Ring ist, der hinter einer Innenschulter (98) des Gehäuses (20) eingerastet ist.

3. Vorrichtung nach Anspruch 2,
   dadurch **gekennzeichnet**, daß die Innenschulter (98) eine dem Gehäuseboden (22) zugewandte Kegelfläche ist, durch die der Einsatz (84) und die gehäusefeste Rampenanordnung (40) axial spielfrei gehalten sind.

4. Vorrichtung nach Anspruch 2 oder 3,
   dadurch **gekennzeichnet**, daß die Innenschulter (98) sich mit einem mindestens annähernd radialen Einlaßkanal (28) für hydraulisches Fluid schneidet, so daß das Befestigungselement (96) mittels eines durch diesen Einlaßkanal (28) eingeführten Werkzeugs ausrastbar ist.

5. Vorrichtung nach einem der Ansprüche 1 bis 4,
   dadurch **gekennzeichnet**, daß der Einsatz (84) hülsenförmig ist und die Rückstellfeder (90) und mindestens die verstellbare Rampenanordnung (50) enthält.

6. Vorrichtung nach Anspruch 5,
   dadurch **gekennzeichnet**, daß der Einsatz (84) an der gehäusefesten Rampenanordnung (40) befestigt ist und daß diese durch das Befestigungselement (96) und die Verdrehsicherung (42) am Gehäuse (20) befestigt ist.

7. Vorrichtung nach Anspruch 5,
dadurch **gekennzeichnet**, daß der Einsatz (84) mit den beiden Rampenanordnungen (40, 50), der Rückstellfeder (90) sowie dem Strebenteil (60), an dem sich die Rückstellfeder (90) abstützt, zu einer Baugruppe vereinigt ist, die durch Befestigung des Einsatzes (84) an der gehäusefesten Rampenanordnung (40) zusammengehalten und als Ganzes in die Zylinderbohrung (26) eingesetzt ist.

8. Vorrichtung nach Anspruch 7,
dadurch **gekennzeichnet**, daß der Einsatz (84) an seinem vom Widerlager (92) entfernten Ende radial nach innen umgebogene Lappen (102) aufweist, die hinter die gehäusefeste Rampenanordnung (40) greifen, und der Einsatz (84) ferner zwischen diesen radial nach innen umgebogene Lappen (102) und dem Widerlager (92) radial nach außen umgebogene Lappen (104) aufweist, die hinter das Befestigungselement (96) greifen.

9. Vorrichtung nach Anspruch 8,
dadurch **gekennzeichnet**, daß der Einsatz (84) im Bereich zwischen dem Widerlager (92) und den radial nach außen umgebogenen Lappen (104) einen geringeren Durchmesser hat als im Bereich zwischen den radial nach außen umgebogenen Lappen (104) und den radial nach innen umgebogenen Lappen (102).

10. Vorrichtung nach Anspruch 1,
dadurch **gekennzeichnet**, daß die Verdrehsicherung ein achsparalleler Stift (42) ist, der im Gehäuseboden (22) befestigt ist und sich durch ein in radialer Richtung längliches Loch (110) in der gehäusefesten Rampenanordnung (40) erstreckt.


## Claims

1. An actuating device with automatic readjustment for a vehicle brake, especially a disc brake, comprising
   – a casing (20) which includes a bottom (22) and a shell (24) having a cylindrical bore (26) which is open toward the brake,
   – a piston (30) which is displaceable hydraulically within the cylindrical bore (26) to actuate the brake,
   – a shaft (34) for mechanical parking brake application which is rotatably supported in the bottom (22) of the casing, coaxially with the piston (30), and sealed,
   – two ramp arrangements (40,50), one (40) being secured to the casing and the other one (50) rotatable by means of the shaft (34), thus being adjustable axially away from the bottom (22) of the casing,
   – a pair of strut members (60,64) screwed together so as to form a readjustable strut between the axially adjustable ramp arrangement (50) and the piston (30), and
   – a return spring (90) which is positioned under axial bias between a thrust bearing (92) secured to the casing and a thrust bearing (58) at one of the two strut members (60) and which tends to keep the adjustable ramp arrangement (50) in an inoperative position, **characterized** in that
   – the bottom (22) of the casing is made in one piece with the shell (24) of the casing,
   – the ramp arrangement (40) which is secured to the casing is a plate which is separate from the bottom (22) of the casing and supported by the same,
   – the thrust bearing (92) which is secured to the casing is formed at an insert (84) guiding one of the strut members (60) in non-rotatable manner, and
   – the ramp arrangement (40) which is secured to the casing as well as the insert (84) are held against axial displacement in the casing (20) by a common fastening member (96) and prevented from rotating by a common twist preventing means (42).

2. The device as claimed in claim 1, characterized in that the common fastening member (96) is a radially resilient ring fitted in snap engagement behind an internal shoulder (98) of the casing (20).

3. The device as claimed in claim 2, characterized in that the internal shoulder (98) is a conical surface which faces the bottom (22) of the casing and by which the insert (84) and the ramp arrangement (40) secured to the casing are retained without axial clearance.

4. The device as claimed in claim 2 or 3, characterized in that the internal shoulder (98) intersects an at least approximately radial inlet duct (28) for hydraulic fluid so that the fastening member (96) is disengageable by means of a tool introduced through this inlet duct (28).

5. The device as claimed in one of claims 1 to 4, characterized in that the insert (84) is sleeve-like and houses the return spring (90) and at least the adjustable ramp arrangement (50).

6. The device as claimed in claim 5, characterized in that the insert (84) is fixed to the ramp arrangement (40) which is secured to the casing, and that the latter is secured to the casing (20) by the fastening member (96) and the twist preventing means (42).

7. The device as claimed in claim 5, characterized in that the insert (84) and the two ramp arrangements (40,50), the return spring (90), as well as the strut member (60) which supports the return spring (90) are joined in an assembly group which is held together by the fastening of the insert (84) at the ramp arrangement (40) secured to the casing and which is inserted as a whole in the cylindrical bore (26).

8. The device as claimed in claim 7, characterized in that the insert (84) is formed at its end remote from the thrust bearing (92) with lugs (102) which are bent radially inwardly and engage behind the ramp arrangement (40) secured to the casing, and between these radially inwardly bent lugs (102) and the thrust bearing (92) the insert (84) further is formed with lugs (104) which are bent radially outwardly and engage behind the fastening member (96).

9. The device as claimed in claim 8, characterized in that the insert (84) has a smaller diameter in the range between the thrust bearing (92) and the radially outwardly bent lugs (104) than in the range between the radially outwardly bent lugs (104) and the radially inwardly bent lugs (102).

10. The device as claimed in claim 1, characterized in that the twist preventing means is a paraxial pin (42) which is fixed in the bottom (22) of the casing and extends through a hole (110) which is formed in the ramp arrangement (40) secured to the casing and is oblong in radial direction.


**Revendications**

1. Dispositif d'actionnement à réglage automatique pour un frein de véhicule, notamment un frein à disque, comportant :
   – un carter (20), qui comprend un fond (22) et une enveloppe (24) pourvue d'un alésage cylindrique (26) ouvert vers le frein,
   – un piston (30) qui est déplaçable hydrauliquement dans l'alésage cylindrique (26) pour l'actionnement du frein,
   – un arbre (34) pour des freinages mécaniques de stationnement, qui est monté de façon tournante et étanche dans le fond (22) du carter, coaxialement avec le piston (30),
   – deux rampes (40, 50), dont l'une (40) est solidaire du carter et l'autre (50) est déplaçable en rotation au moyen de l'arbre (34) et peut ainsi être écartée axialement du fond de carter (22),
   – une paire de parties de poussoir (60, 64), qui sont vissées l'une avec l'autre de manière à former un poussoir réglable entre la rampe (50) mobile axialement et le piston (30), et
   – un ressort de rappel (90), qui est disposé avec une précontrainte axiale entre un appui (92) solidaire du carter et un appui (58) prévu sur une des deux parties de poussoir (60) et qui a tendance à maintenir la rampe mobile (50) dans une position de repos,
   – caractérisé en ce que :
   – le fond de carter (22) forme une seule et même pièce avec l'enveloppe de carter (24),
   – la rampe (40) solidaire du carter est constituée par une plaque séparée du fond de carter (22) et s'appuyant contre celui-ci,
   – l'appui (92) solidaire du carter est formé sur une pièce d'insertion (84), sur laquelle est guidée sans possibilité de rotation relative une des parties de poussoir (60), et
   – la rampe (40) solidaire du carter ainsi que la pièce d'insertion (84) sont maintenues sans possibilité de translation axiale dans le carter (20) au moyen d'un élément commun de fixation (96) et sont empêchées de tourner par un organe antirotation commun (42).

2. Dispositif selon la revendication 1, caractérisé en ce que l'élément commun de fixation (96) est un anneau radialement élastique qui est engorgé derrière un épaulement intérieur (98) du carter (20).

3. Dispositif selon la revendication 2, caractérisé en ce que l'épaulement intérieur (98) est une surface conique dirigée vers le fond de carter (22) et par laquelle la pièce d'insertion (84) et la rampe (40) solidaire du carter sont maintenues sans jeu axial.

4. Dispositif selon la revendication 2 ou 3, caractérisé en ce que l'épaulement intérieur (98) est coupé par un canal (28) d'admission de fluide hydraulique, orienté au moins approximativement radialement, de telle sorte que l'élément de fixation (96) puisse être dégagé au moyen d'un outil introduit dans ce canal d'admission (28).

5. Dispositif selon une des revendications 1 à 4, caractérisé en ce que la pièce d'insertion (84) est en forme de fourreau et contient le ressort de rappel (90) et au moins la rampe mobile (50).

6. Dispositif selon la revendication 5, caractérisé en ce que la pièce d'insertion (84) est fixée sur la rampe (40) solidaire du carter et en ce que celle-ci est fixée sur le carter (20) par l'élément de fixation (90) et l'organe antirotation (42).

7. Dispositif selon la revendication 5, caractérisé en ce que la pièce d'insertion (84) est combinée avec les deux rampes (40, 50), le ressort de rappel (90) et la partie de poussoir (60), contre laquelle s'appuie le ressort de rappel (90), pour former un groupe qui est maintenu assemblé par fixation de la pièce d'insertion (84) sur la rampe (40) solidaire du carter et qui est monté comme un ensemble unitaire dans l'alésage cylindrique (26).

8. Dispositif selon la revendication 7, caractérisé en ce que la pièce d'insertion (84) comporte, à son extrémité opposée à l'appui (92), des taquets (102) recourbés radialement vers l'intérieur et qui s'accrochent en arrière de la rampe (40) solidaire du carter, et la pièce d'insertion (84) comporte en outre, entre ces taquets (102) recourbés radialement vers l'intérieur et l'appui (92), des taquets (104) recourbés radialement vers l'extérieur et s'accrochant en arrière de l'élément de fixation (96).

9. Dispositif selon la revendication 8, caractérisé en ce que la pièce d'insertion (84) a, dans la zone située entre l'appui (92) et les taquets (104) recourbés radialement vers l'extérieur, un plus petit diamètre que dans la zone située entre les taquets (104) recourbés radialement vers l'extérieur et les taquets (102) recourbés radialement vers l'intérieur.

10. Dispositif selon la revendication 1, caractérisé en ce que l'organe antirotation est une broche (42) parallèle à l'axe, qui est fixée dans le fond (22) du carter et qui s'étend à travers un trou (110) allongé en direction radiale et formé dans la rampe (40) solidaire du carter.

EP 0 403 635 B1

FIG.1

FIG.3

FIG.4

11

FIG. 2

FIG.5

FIG.7

FIG.8

FIG.6

FIG.9

FIG.12

FIG.10

FIG.11

16